# EUROPEAN PATENT APPLICATION

(11) **EP 4 228 180 A1**
(43) Date of publication of application: **16.08.2023**
(21) Application number: 22156882.7
(22) Date of filing: 15.02.2022
(51) Int. Cl.: H04L 1/08, H04W 28/02, H04L 47/2441, H04L 47/24, H04L 45/24

(54) **APPARATUS, METHODS, AND COMPUTER PROGRAMS**

(71) Applicant: Nokia Technologies Oy, 02610 Espoo (FI)
(72) Inventor: CHANDRAMOULI, Devaki, Plano, 75025 (US); GKATZIKIS, Lazaros, 92130 Issy-les-Moulineaux (FR); HE, Mu, 80639 Munich (DE); LIEBHART, Rainer, D-81476 Munich (DE); GKELLAS, Georgios, GR-13232 Petroupoli (GR); THIEBAUT, Laurent, 92160 Antony (FR)
(74) Representative: Page White Farrer

(57) **Abstract**

There is provided an apparatus, method and computer program for a network function, that causes the apparatus to signal, to a replication handling function, a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission.

## Description

### Field

Various examples described herein generally relate to apparatus, methods, and computer programs, and more particularly (but not exclusively) to apparatus, methods and computer programs for network apparatuses.

### Background

In general, a communication system can be seen as a facility that enables communication sessions between two or more entities such as user terminals, access nodes and/or other nodes by providing carriers between the various entities involved in the communications path. A communication system can be provided, for example, by means of a communication network and one or more compatible communication devices. The communication sessions may comprise, for example, communication of data for carrying communications such as voice, electronic mail (email), text message, multimedia and/or content data and so on. Content may be multicast or uni-cast to communication devices.

A user can access the communication system by means of an appropriate communication device or terminal. A communication device of a user is often referred to as user equipment (UE) or user device. The communication device may access a carrier provided by an access node and transmit and/or receive communications on the carrier.

The communication system and associated devices typically operate in accordance with a required standard or specification which sets out what the various entities associated with the system are permitted to do and how that should be achieved. Communication protocols and/or parameters which shall be used for the connection are also typically defined. One example of a communications system is UTRAN (3G radio). Another example of an architecture is the long-term evolution (LTE) or the Universal Mobile Telecommunications System (UMTS) radio-access technology. Another example communication system is so called 5G system that allows user equipment (UE) or user device to contact a 5G core via e.g. new radio (NR) access technology or via other access technology such as Untrusted access to 5GC or wireline access technology.

There is a need to provide control systems which enable a communications service provider (CSP) to control and optimise a complex network of communications system elements.

One of current approaches being employed is closed-loop automation and machine learning which can be built into self-organizing networks (SON) enabling an operator to automatically optimize every cell in the radio access network.

### Summary

According to a first aspect, there is provided an apparatus comprising a replication function, the apparatus comprising means for: receiving a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission; determining that the first user traffic fulfils at least one of the replication criteria while the second user traffic does not fulfil at least one of the replication criteria; and causing, in response to said determination, the first user traffic to be transmitted over one or more transmission paths using a replication-based redundancy mechanism and the second user traffic to be transmitted over one or more transmission paths without using the replication-based redundancy mechanism.

The replication criteria may be received from at least one of a policy control function and/or a session management function.

The replication function may be collocated in a same apparatus as a first user equipment configured to transmit the first and/or second user traffic.

The replication function may be collocated with a user plane function configured to replicate user traffic based on the received set of replication criteria.

The apparatus may comprise means for: receiving third user traffic over a network; determining that the third user traffic was transmitted using at least one replication-based redundancy mechanism; and in response to the determining, causing at least one duplicate packet comprised in the third user traffic to be deleted.

Said means for determining that the third user traffic was transmitted using at least one replication-based redundancy mechanism may comprise means for detecting a same packet identifier and/or same sequence number in multiple packets of the third user traffic.

The replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

According to a second aspect, there is provided an apparatus for a user equipment, the apparatus comprising means for: receiving a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission; forwarding the replication criteria to a replication function; and transmitting the first user traffic and/or the second user traffic in response to receiving an indication to do so from the replication function.

The apparatus may comprise means for: receiving, from a network, routing rules defining how user traffic is routed through the network, wherein the replication criteria are comprised in the routing rules; and detecting an explicit indication that the replication criteria are comprised in said network routing rules.

The routing rules may comprise: Access Traffic Steering, Switching and Splitting rules and/or user equipment route selection policy rules.

The apparatus may comprise means for establishing one or more data sessions to ensure the replication criteria can be fulfilled, said means for establishing said one of more data sessions comprising means for signalling to the network a request that the one or more data sessions use an identifier provided in said received indication.

The apparatus may comprise means for signalling, to a network function, an indication that the user equipment is collocated with the replication handling function, wherein the replication criteria are received in response to said signalling.

The replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

According to a third aspect, there is provided an apparatus for a network function, the apparatus comprising means for: signalling, to a replication handling function, a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission.

The apparatus may comprise means for receiving, from a user equipment, an indication that the user equipment is collocated with the replication handling function, wherein said signalling is performed in response to said receipt.

The apparatus may comprise means for comprising the replication criteria in the same signalling as routing rules, the routing rules defining how user traffic is routed through the network, wherein the signalling further comprises an explicit indication that the replication criteria are comprised in said same signalling.

The routing rules may comprise: Access Traffic Steering, Switching and Splitting rules and/or user equipment route selection policy rules.

The replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

According to a fourth aspect, there is provided an apparatus comprising a replication function, the apparatus comprising: at least one processor; and at least memory comprising code that, when executed by the at least one processor, causes the apparatus to: receive a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission; determine that the first user traffic fulfils at least one of the replication criteria while the second user traffic does not fulfil at least one of the replication criteria; and cause, in response to said determination, the first user traffic to be transmitted over one or more transmission paths using a replication-based redundancy mechanism and the second user traffic to be transmitted over one or more transmission paths without using the replication-based redundancy mechanism.

The replication criteria may be received from at least one of a policy control function and/or a session management function.

The replication function may be collocated in a same apparatus as a first user equipment configured to transmit the first and/or second user traffic.

The replication function may be collocated with a user plane function configured to replicate user traffic based on the received set of replication criteria.

The apparatus may be caused to: receive third user traffic over a network; determine that the third user traffic was transmitted using at least one replication-based redundancy mechanism; and in response to the determining, cause at least one duplicate packet comprised in the third user traffic to be deleted.

Said determining that the third user traffic was transmitted using at least one replication-based redundancy mechanism may comprise detecting a same packet identifier and/or same sequence number in multiple packets of the third user traffic.

The replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

According to a fifth aspect, there is provided an apparatus for a user equipment, the apparatus comprising: at least one processor; and at least one memory comprising code that, when executed by the at least one processor, causes the apparatus to: receive a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission; forward the replication criteria to a replication function; and transmit the first user traffic and/or the second user traffic in response to receiving an indication to do so from the replication function.

The apparatus may be caused to: receive, from a network, routing rules defining how user traffic is routed through the network, wherein the replication criteria are comprised in the routing rules; and detect an explicit indication that the replication criteria are comprised in said network routing rules.

The routing rules may comprise: Access Traffic Steering, Switching and Splitting rules and/or user equipment route selection policy rules.

The apparatus may be caused to establish one or more data sessions to ensure the replication criteria can be fulfilled, said establishing said one of more data sessions comprising signalling to the network a request that the one or more data sessions use an identifier provided in said received indication.

The apparatus may be caused to signal, to a network function, an indication that the user equipment is collocated with the replication handling function, wherein the replication criteria are received in response to said signalling.

The replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

According to a sixth aspect, there is provided an apparatus for a network function, the apparatus comprising: at least one processor; and at least one memory comprising code that, when executed by the at least one processor, causes the apparatus to: signal, to a replication handling function, a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission.

The apparatus may be caused to receive, from a user equipment, an indication that the user equipment is collocated with the replication handling function, wherein said signalling is performed in response to said receipt.

The apparatus may be caused to comprise the replication criteria in the same signalling as routing rules, the routing rules defining how user traffic is routed through the network, wherein the signalling further comprises an explicit indication that the replication criteria are comprised in said same signalling.

The routing rules may comprise: Access Traffic Steering, Switching and Splitting rules and/or user equipment route selection policy rules.

The replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

According to a seventh aspect, there is provided a method for an apparatus comprising a replication function, the method comprising: receiving a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission; determining that the first user traffic fulfils at least one of the replication criteria while the second user traffic does not fulfil at least one of the replication criteria; and causing, in response to said determination, the first user traffic to be transmitted over one or more transmission paths using a replication-based redundancy mechanism and the second user traffic to be transmitted over one or more transmission paths without using the replication-based redundancy mechanism.

The replication criteria may be received from at least one of a policy control function and/or a session management function.

The replication function may be collocated in a same apparatus as a first user equipment configured to transmit the first and/or second user traffic.

The replication function may be collocated with a user plane function configured to replicate user traffic based on the received set of replication criteria.

The method may comprise: receiving third user traffic over a network; determining that the third user traffic was transmitted using at least one replication-based redundancy mechanism; and in response to the determining, causing at least one duplicate packet comprised in the third user traffic to be deleted.

Said determining that the third user traffic was transmitted using at least one replication-based redundancy mechanism may comprise detecting a same packet identifier and/or same sequence number in multiple packets of the third user traffic.

The replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

According to an eighth aspect, there is provided a method for an apparatus for a user equipment, the method comprising: receiving a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission; forwarding the replication criteria to a replication function; and transmitting the first user traffic and/or the second user traffic in response to receiving an indication to do so from the replication function.

The method may comprise: receiving, from a network, routing rules defining how user traffic is routed through the network, wherein the replication criteria are comprised in the routing rules; and detecting an explicit indication that the replication criteria are comprised in said network routing rules.

The routing rules may comprise: Access Traffic Steering, Switching and Splitting rules and/or user equipment route selection policy rules.

The method may comprise establishing one or more data sessions to ensure the replication criteria can be fulfilled, said establishing said one of more data sessions comprising signalling to the network a request that the one or more data sessions use an identifier provided in said received indication.

The method may comprise signalling, to a network function, an indication that the user equipment is collocated with the replication handling function, wherein the replication criteria are received in response to said signalling.

The replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

According to a ninth aspect, there is provided a method for an apparatus for a network function, the method comprising: signalling, to a replication handling function, a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission.

The method may comprise receiving, from a user equipment, an indication that the user equipment is collocated with the replication handling function, wherein said signalling is performed in response to said receipt.

The method may comprise comprising the replication criteria in the same signalling as routing rules, the routing rules defining how user traffic is routed through the network, wherein the signalling further comprises an explicit indication that the replication criteria are comprised in said same signalling.

The routing rules may comprise: Access Traffic Steering, Switching and Splitting rules and/or user equipment route selection policy rules.

The replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

According to a tenth aspect, there is provided an apparatus comprising a replication function, the apparatus comprising: receiving circuitry for receiving a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission; determining circuitry for determining that the first user traffic fulfils at least one of the replication criteria while the second user traffic does not fulfil at least one of the replication criteria; and causing circuitry for causing, in response to said determination, the first user traffic to be transmitted over one or more transmission paths using a replication-based redundancy mechanism and the second user traffic to be transmitted over one or more transmission paths without using the replication-based redundancy mechanism.

The replication criteria may be received from at least one of a policy control function and/or a session management function.

The replication function may be collocated in a same apparatus as a first user equipment configured to transmit the first and/or second user traffic.

The replication function may be collocated with a user plane function configured to replicate user traffic based on the received set of replication criteria.

The apparatus may comprise: receiving circuitry for receiving third user traffic over a network; determining circuitry for determining that the third user traffic was transmitted using at least one replication-based redundancy mechanism; and causing circuitry for, in response to the determining, causing at least one duplicate packet comprised in the third user traffic to be deleted.

Said determining circuitry for for determining that the third user traffic was transmitted using at least one replication-based redundancy mechanism may comprise detecting circuitry for detecting a same packet identifier and/or same sequence number in multiple packets of the third user traffic.

The replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

According to an eleventh aspect, there is provided an apparatus for a user equipment, the apparatus comprising: receiving circuitry for receiving a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission; forwarding circuitry for forwarding the replication criteria to a replication function; and transmitting circuitry for transmitting the first user traffic and/or the second user traffic in response to receiving an indication to do so from the replication function.

The apparatus may comprise: receiving circuitry for receiving, from a network, routing rules defining how user traffic is routed through the network, wherein the replication criteria are comprised in the routing rules; and detecting circuitry for detecting an explicit indication that the replication criteria are comprised in said network routing rules.

The routing rules may comprise: Access Traffic Steering, Switching and Splitting rules and/or user equipment route selection policy rules.

The apparatus may comprise establishing circuitry for establishing one or more data sessions to ensure the replication criteria can be fulfilled, said establishing circuitry for establishing said one of more data sessions comprising signalling circuitry for signalling to the network a request that the one or more data sessions use an identifier provided in said received indication.

The apparatus may comprise signalling circuitry for signalling, to a network function, an indication that the user equipment is collocated with the replication handling function, wherein the replication criteria are received in response to said signalling.

The replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

According to a twelfth aspect, there is provided an apparatus for a network function, the apparatus comprising: signalling circuitry for signalling, to a replication handling function, a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission.

The apparatus may comprise receiving circuitry for receiving, from a user equipment, an indication that the user equipment is collocated with the replication handling function, wherein said signalling is performed in response to said receipt.

The apparatus may comprise comprising circuitry for comprising the replication criteria in the same signalling as routing rules, the routing rules defining how user traffic is routed through the network, wherein the signalling further comprises an explicit indication that the replication criteria are comprised in said same signalling.

The routing rules may comprise: Access Traffic Steering, Switching and Splitting rules and/or user equipment route selection policy rules.

The replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

According to a thirteenth aspect, there is provided non-transitory computer readable medium comprising program instructions for causing an apparatus for a replication function to perform at least the following: receive a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission; determine that the first user traffic fulfils at least one of the replication criteria while the second user traffic does not fulfil at least one of the replication criteria; and cause, in response to said determination, the first user traffic to be transmitted over one or more transmission paths using a replication-based redundancy mechanism and the second user traffic to be transmitted over one or more transmission paths without using the replication-based redundancy mechanism.

The replication criteria may be received from at least one of a policy control function and/or a session management function.

The replication function may be collocated in a same apparatus as a first user equipment configured to transmit the first and/or second user traffic.

The replication function may be collocated with a user plane function configured to replicate user traffic based on the received set of replication criteria.

The apparatus may be caused to: receive third user traffic over a network; determine that the third user traffic was transmitted using at least one replication-based redundancy mechanism; and in response to the determining, cause at least one duplicate packet comprised in the third user traffic to be deleted.

Said determining that the third user traffic was transmitted using at least one replication-based redundancy mechanism may comprise detecting a same packet identifier and/or same sequence number in multiple packets of the third user traffic.

The replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

According to a fourteenth aspect, there is provided non-transitory computer readable medium comprising program instructions for causing an apparatus for a user equipment to perform at least the following: receive a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission; forward the replication criteria to a replication function; and transmit the first user traffic and/or the second user traffic in response to receiving an indication to do so from the replication function.

The apparatus may be caused to: receive, from a network, routing rules defining how user traffic is routed through the network, wherein the replication criteria are comprised in the routing rules; and detect an explicit indication that the replication criteria are comprised in said network routing rules.

The routing rules may comprise: Access Traffic Steering, Switching and Splitting rules and/or user equipment route selection policy rules.

The apparatus may be caused to establish one or more data sessions to ensure the replication criteria can be fulfilled, said establishing said one of more data sessions comprising signalling to the network a request that the one or more data sessions use an identifier provided in said received indication.

The apparatus may be caused to signal, to a network function, an indication that the user equipment is collocated with the replication handling function, wherein the replication criteria are received in response to said signalling.

The replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

According to a fifteenth aspect, there is provided non-transitory computer readable medium comprising program instructions for causing an apparatus for a network function to perform at least the following: signal, to a replication handling function, a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission.

The apparatus may be caused to receive, from a user equipment, an indication that the user equipment is collocated with the replication handling function, wherein said signalling is performed in response to said receipt.

The apparatus may be caused to comprise the replication criteria in the same signalling as routing rules, the routing rules defining how user traffic is routed through the network, wherein the signalling further comprises an explicit indication that the replication criteria are comprised in said same signalling.

The routing rules may comprise: Access Traffic Steering, Switching and Splitting rules and/or user equipment route selection policy rules.

The replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

According to a sixteenth aspect, there is provided a computer program product stored on a medium that may cause an apparatus to perform any method as described herein.

According to a seventeenth aspect, there is provided an electronic device that may comprise apparatus as described herein.

According to an eighteenth aspect, there is provided a chipset that may comprise an apparatus as described herein.

### Brief description of Figures

Some examples, will now be described, merely by way of illustration only, with reference to the accompanying drawings in which:
Figures 1A and 1B show a schematic representation of a 5G system;
Figure 2 shows a schematic representation of a network apparatus;
Figure 3 shows a schematic representation of a user equipment;
Figure 4 shows a schematic representation of a non-volatile memory medium storing instructions which when executed by a processor allow a processor to perform one or more of the steps of the methods of some examples;
Figure 5 shows a schematic representation of a network;
Figures 6A, 6B, and 6C show schematic representations of example networks; and
Figures 7 to 9 are flow charts illustrating potential operations by example apparatus.

### Detailed description

In the following description of examples, certain aspects are explained with reference to mobile communication devices capable of communication via a wireless cellular system and mobile communication systems serving such mobile communication devices. For brevity and clarity, the following describes such aspects with reference to a 5G wireless communication system. However, it is understood that such aspects are not limited to 5G wireless communication systems, and may, for example, be applied to 5G wireless and non wireless communication systems or to other wireless communication systems (for example, 6G wireless communication systems).

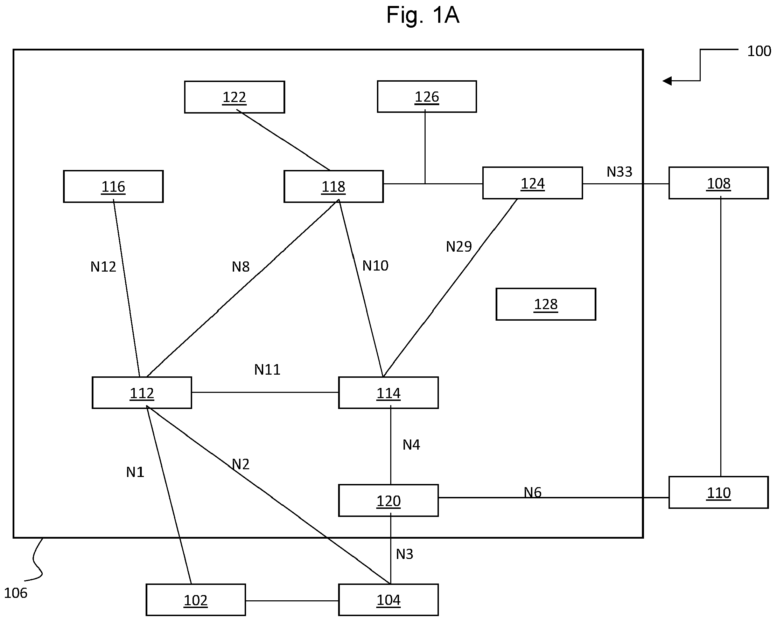

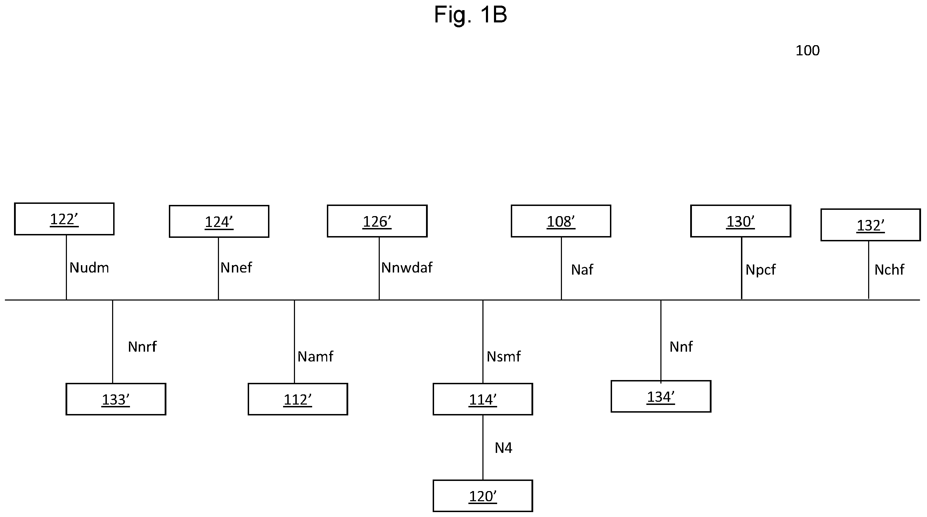

Before describing in detail the examples, certain general principles of a 5G wireless communication system are briefly explained with reference to Figures 1A and 1B.

Figure 1A shows a schematic representation of a 5G system (5GS) 100. The 5GS may comprise a user equipment (UE) 102 (which may also be referred to as a communication device or a terminal), a 5G access network (AN) (which may be a 5G Radio Access Network (RAN) or any other type of 5G AN such as a Non-3GPP Interworking Function (N3IWF) /a Trusted Non3GPP Gateway Function (TNGF) for Untrusted / Trusted Non-3GPP access or Wireline Access Gateway Function (W-AGF) for Wireline access) 104, a 5G core (5GC) 106, one or more application functions (AF) 108 and one or more data networks (DN) 110.

The 5G RAN may comprise one or more gNodeB (gNB) distributed unit functions connected to one or more gNodeB (gNB) central unit functions. The RAN may comprise one or more access nodes.

The 5GC 106 may comprise one or more Access and Mobility Management Functions (AMF) 112, one or more Session Management Functions (SMF) 114, one or more authentication server functions (AUSF) 116, one or more unified data management (UDM) functions 118, one or more user plane functions (UPF) 120, one or more unified data repository (UDR) functions 122, one or more network repository functions (NRF) 128, and/or one or more network exposure functions (NEF) 124. The role of an NEF is to provide secure exposure of network services (e.g. voice, data connectivity, charging, subscriber data, and so forth) towards a 3rd party. Although NRF 128 is not depicted with its interfaces, it is understood that this is for clarity reasons and that NRF 128 may have a plurality of interfaces with other network functions.

The 5GC 106 also comprises a network data analytics function (NWDAF) 126. The NWDAF is responsible for providing network analytics information upon request from one or more network functions or apparatus within the network. Network functions can also subscribe to the NWDAF 126 to receive information therefrom. Accordingly, the NWDAF 126 is also configured to receive and store network information from one or more network functions or apparatus within the network. The data collection by the NWDAF 126 may be performed based on at least one subscription to the events provided by the at least one network function.

The network may further comprise a management data analytics service (MDAS) producer or MDAS Management Service (MnS) producer. The MDAS MnS producer may provide data analytics in the management plane considering parameters including, for example, load level and/or resource utilization. For example, the MDAS MnS producer for a network function (NF) may collect the NF's load-related performance data, e.g., resource usage status of the NF. The analysis of the collected data may provide forecast of resource usage information in a predefined future time window. This analysis may also recommend appropriate actions e.g., scaling of resources, admission control, load balancing of traffic, and so forth.

Figure 1B shows a schematic representation of a 5GC represented in current 3GPP specifications. It is understood that this architecture is intended to illustrate potential components that may be comprised in a core network, and the presently described principles are not limited to core networks comprising only the described components.

Figure 1B shows a 5GC 106' comprising a UPF 120' connected to an SMF 114' over an N4 interface. The SMF 114' is connected to each of a UDM 122', an NEF 124', an NWDAF 126', an AF 108', a Policy Control Function (PCF) 130', an AMF 112', and a Charging function 132' over an interconnect medium that also connects these network functions to each other. The 5G core 106' further comprises a network repository function (NRF) 133' and a network function 134' that connect to the interconnect medium.

3GPP refers to a group of organizations that develop and release different standardized communication protocols. 3GPP develops and publishes documents pertaining to a system of "Releases" (e.g., Release 15, Release 16, etc...).

Various 3GPP Releases have, or will, refer to Ultra-Reliable-Low-Latency-Communications (URLLC). URLLC is a new service category in 5G that is configured to accommodate services and applications having stringent latency and reliability requirements.

One way of improving reliability for 3GPP traffic is to duplicate (i.e., replicate) traffic in order to transmit the same data/traffic multiple times. Transmitting data multiple times increases the likelihood of that data being received, making the overall traffic more reliable.

3GPP Release 16 defined various URLLC methods for duplicating traffic in order to improve reliability. These URLLC methods include, for example, technologies related to dual connectivity (e.g., where a UE is allowed to simultaneously transmit and receive data on multiple component carriers from two cell groups via a master eNodeB (MN) and a secondary eNodeB (SN)), dual packet data unit (PDU) Session (e.g., where a UE is allowed the establishment of multiple PDU sessions in parallel), dual N3 tunnel (an N3 interface connects a radio access network to a user plane function), and dual N3 transport support.

Some over-the-top mechanisms have been proposed in support of such duplication techniques across a range of different communication protocols and working groups. These mechanisms all relate to full duplication of the traffic (in other words, all of the traffic is duplicated). In addition to supporting full-traffic duplication, these mechanisms cannot be controlled by the 3GPP system and thus by the 3GPP operator.

As a first example mechanism, application-level multipath (potentially over multiple interfaces) is considered. These may be performed using, for example, Multipath Transport Control Protocol (MPTCP), which is a protocol defined by the Internet Engineering Task Force (IETF) to enhance Transport Control Protocol (TCP) capabilities in handling multiple addresses for data. Although a mechanism based on similar principles may be feasible in 3GPP, such mechanisms rely on a UE device or operating system running thereon being configured to allow the concurrent use of the multiple interfaces, and both end points of the traffic duplication need to be properly configured.

It is noted that 3GPP Release 16 submissions have also specified Access Traffic Steering, Switching and Splitting (ATSSS) mechanisms for enabling the parallel use of a 3GPP and a non-3GPP access. In particular, these ATSSS mechanisms allow steering traffic of a PDU session across multiple accesses. However, in this defined mechanism, each PDU of the PDU session is sent over a single access, and no traffic is duplicated/retransmitted in the two accesses prior to receiving any feedback information. ATSSS active-standby steering mode is a second example of reliability mechanism, a reactive mechanism that does no traffic duplication.

As mentioned above, URLLC is a third example in which traffic duplication is performed. In this example, 3GPP attempted to address some of the problems associated with URLLC mechanisms in Technical Report 23.725. This Technical Report introduced a Replication Handling Function (RHF) for use in at least one of a single UE case and in and dual UE cases. However, this document did not address the problem on how the UE(s) knows whether to establish a redundant PDU Session by itself, or whether another UE will establish a redundant PDU Session for transmitting replicated data. Essentially, the establishment and management of replication/elimination and the protocol enablers for replication/elimination has not been addressed.

An RHF analyzes a first packet based on RHF Rules to determine whether it should be routed over multiple UE(s) with duplicated PDU Sessions. If the packet is to be routed, the RHF may then determine via which UEs the packet it to be routed. The UE(s) may then schedule either a single PDU session or two PDU sessions depending on the determination by the RHF. The RHF generates duplicate traffic as per TS23.501.

However, URLLC only applies to 3GPP access (i.e. the NG-RAN). Further, URLLC does not specify how the duplicate paths are to be used for redundant traffic delivery end-to-end. In particular, it is out of scope of 3GPP how to make use of the duplicate paths for redundant traffic delivery end-to-end and, from a 3GPP system perspective, either all traffic is either replicated or no traffic is replicated. Furthermore, the 3GPP system has no control of replication performed end-to-end.

It is possible to rely on upper layer protocols, such as the IEEE 802.1 TSN (Time Sensitive Networking) FRER (Frame Replication and Elimination for Reliability) protocols, to manage the replication and elimination of redundant packets/frames over the duplicate paths in order to improve reliability. These upper-layer protocols may span both the 3GPP segments and possibly fixed network segments as well.

A problem with these current 3GPP specified URLLC duplication methods is that they are static in that either all the traffic for the QoS Flow and/or whole PDU Session is duplicated, or no traffic is duplicated. This it is not efficient, as it may lead to an inefficient consumption of radio resources, and may consume unnecessary power in the UE and network. A QoS flow may be considered a granularity of QoS differentiation within a PDU session, and may be classified as a guaranteed bit rate (GBR) flow or as a non-GBR flow. A QoS flow may be identified by a QoS flow identifier. Every QoS flow has a QoS profile that includes QoS parameters and QoS characteristics defining that QoS flow.

Further, these techniques do not provide any definition of criteria for user plane traffic that allow for specifying intelligent rules for replication of traffic selectively within a Quality of Service (QoS) flow and/or within a PDU Session. In the present context, intelligent replication refers to replicating only a subset of all possible packets (i.e., not replicating all packets indiscriminately). In particular, packets may be replicated only when certain criteria or rules are fulfilled. In principle, artificial intelligence (AI) and/or machine learning (ML) mechanisms may be used to select which packets are to be replicated.

In other words, there are no means to perform selective intelligent duplication of traffic in order to improve reliability only for really critical data and/or considering the network resource situation, radio frequency condition, etc.

The following proposes mechanisms for addressing at least one of the above-mentioned issues. In particular, the following proposes mechanisms for allowing intelligent replication criteria to be used for duplicating user plane traffic, and for providing the corresponding rules for controlling duplication of uplink and downlink traffic to at least one of a UE and/or a user plane function (UPF).

The presently described techniques may be applied to any of Single Access (SA) and Multi Access (MA) PDU Sessions. In other words, the presently described techniques are agnostic in terms of PDU session type.

The presently described techniques are also agnostic in respect of the type of used access (e.g., 3GPP access or non-3GPP access). For brevity and clarity, the following will describe architectures and entities that may be used to implement the presently described techniques using 3GPP access terminology. However, it is understood that this is not limiting and that simultaneous usage of 3GPP access and of non 3GPP access or simultaneous usage of multiple non 3GPP accesses is supported by the present disclosure.

Before the potential mechanisms are described, an overview of some potential architectures for implementing the presently described techniques is provided.

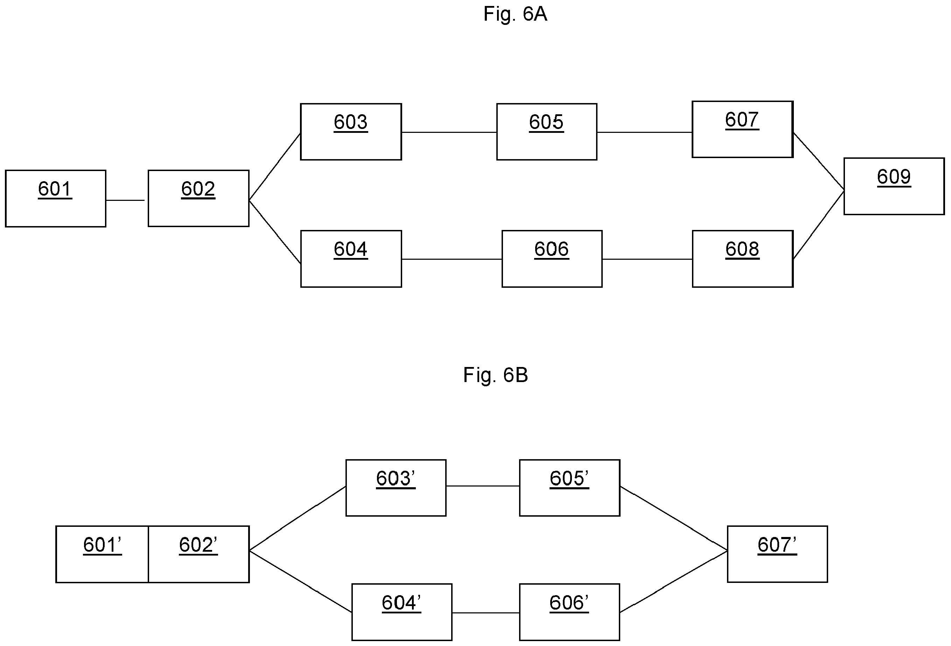

Figures 6A and 6B illustrate different architectures in which the presently described techniques may be implemented.

Figure 6A illustrates a first architecture. Figure 6A illustrates a first host 601 connected to a UE 602. The UE 602 is configured to communicate with a network via both a first access point/gNB 603 and a second access point/gNB 604. Each of the first and second access points are configured to route traffic for the UE to and from respective user plane functions, labelled as the first user plane function 605 and the second user plane function 606 in Figure 6A. The first user plane function 605 is configured to route traffic to and from a second host 609 via a first data network 607. The second user plane function 606 is configured to route traffic to and from the second host 609 via a second data network 608 where the data network 607 and the data network 608 may be the same or different data networks.

In this architecture, the replication of packets and the elimination of packets may be performed by respective applications located in at least one of the first host 601 and/or the second host 609. Although not shown, this application may be labelled a replication handling function (RHF). In other words, the duplication and/or the elimination may be performed outside of the 3GPP network architecture. The 3GPP system in this architecture may be configured to establish redundant PDU sessions for transmitting duplicates of traffic transmitted over another PDU session. The redundant PDU sessions may comprise at least one of a multi-access PDU session (which may be triggered by the UE 602), and/or dual connectivity, and/or Packet Data Convergence Protocol duplication, etc.

Figure 6B illustrates a second architecture in which the present described techniques may be implemented.

Figure 6B illustrates a first replication handling function (RHF) 601' connected to a UE 602'. The first RHF 601' and the UE 602' may be collocated in the same device (not shown). The first RHF 601' and the UE 602' may be collocated in the same device (not shown) with another UE (not shown) that is configured to operate in the same manner as UE 602'.

The UE 602' is configured to exchange traffic to and from a first access point/gNB 603' and a second access point/gNB 604'. Throughout the following, it is understood that the term "exchange traffic" may include instances in which user traffic is sent in a single direction (e.g., when sensors provide measurement information to a network), in addition to instances in which user traffic is sent in both directions (e.g., bi directional communication). Each of the first and second access points are configured to route traffic for the UE to and from respective user plane functions, labelled as the first user plane function 605' and the second user plane function 606' in Figure 6B. Both the first and second user plane functions 605', 606' are configured to exchange traffic with a second RHF 607'.

In this example architecture of Figure 6B, packet replication and elimination may be performed by ingress and egress end points within the 3GPP system labelled as RHFs. The RHFs are also referred to herein as "Replication handling functions" and/or "Replication functions". In the example architecture of Figure 6A, the first and second hosts may be considered as being ingress and egress points for the duplicated data/traffic.

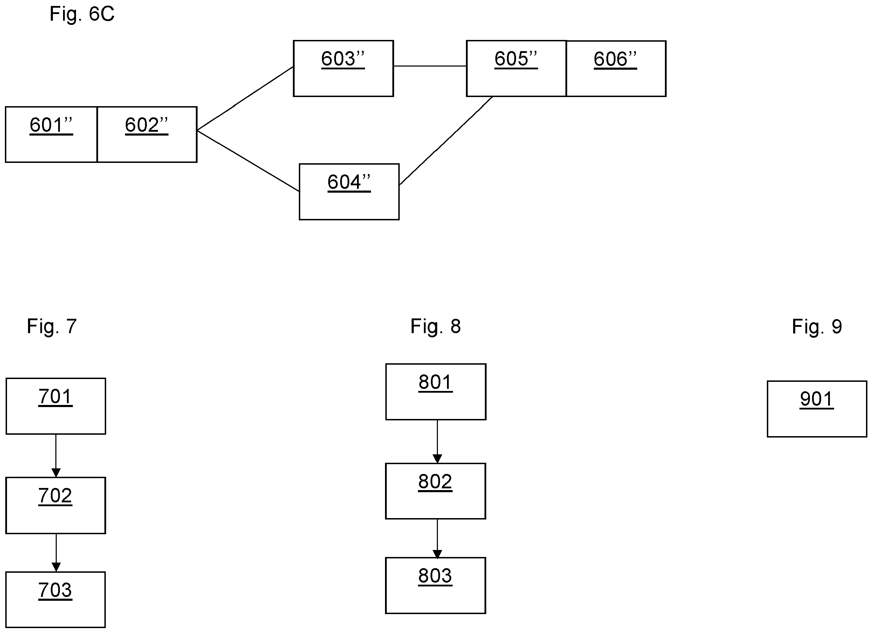

In contrast to the example illustrated with respect to Figure 6B, it is understood that the second RHF may be collocated with a single user plane function configured to terminate the two PDU Sessions. The presently described techniques may be applied to any of the architecture options described herein and for any type of access type (i.e., the access points are not limited to only being gNBs). This example architecture is illustrated with respect of Figure 6C.

Figure 6C illustrates a first replication handling function (RHF) 601" connected to a UE 602". The first RHF 601" and the UE 602" may be collocated in the same device (not shown). The first RHF 601" and the UE 602" may be collocated in the same device (not shown) with another UE (not shown) that is configured to operate in the same manner as UE 602".

The UE 602" is configured to exchange traffic to and from a first access point/gNB 603" and a second access point/gNB 604". Throughout the following, it is understood that the term "exchange traffic" may include instances in which user traffic is sent in a single direction (e.g., when sensors provide measurement information to a network), in addition to instances in which user traffic is sent in both directions (e.g., bi directional communication). Each of the first and second access points are configured to route traffic for the UE to and from a first user plane function 605". The first user plane function 605" is collocated with a second RHF 606".

As mentioned above, the present application describes mechanisms relating to an intelligent packet duplication method.

These mechanisms may be broadly covered by a series of three steps.

As a first step, a set of replication criteria may be configured at a network entity and later provided to a host and/or an RHF (as per the architectures of Figures 6A and 6B). Alternatively, the replication criteria can be negotiated between the application server and the 5G System. The replication criteria may be defined by an operator. The replication criteria may be configured in certain rules. For example, the replication criteria may be configured in ATSSS rules. The rules comprising the replication criteria may be sent by a network entity (e.g., an SMF) to a UE for provision to an RHF associated therewith. In another example, the replication criteria may be determined by a PCF 130'. The rules comprising the replication criteria may be sent by a network entity (e.g., a PCF 130') to a UE via URSP rules for the UE to provision to an RHF associated therewith.

The set of replication criteria may define a set of condition(s) for determining how and/or when user plane (UP) traffic will be replicated on the available access paths for uplink and/or downlink traffic. The set of replication criteria may comprise a single criterion. The set of replication criteria may comprise two or more criteria.

A replication criterion comprises information used for the respective redundancy function for identifying the traffic to be replicated. The traffic may be replicated in a number of different ways. For example, the traffic may be replicated using dual PDU sessions, and/or dual connectivity links, and/or multi access PDU Sessions, etc.

The replication criteria may be configured in the network and provided to the UE for the uplink, gNB and/or network RHF (possibly co-located in an UPF) for the downlink. At least one of the replication criteria may be generated by a session management function and/or by a Policy and Control Function located in the network. These replication criteria may also be negotiated between the UE and the network or the application server and the 5G System. The replication criteria may be defined in respect of a single QoS Flow, single PDU session (possibly a Multi access PDU Session) and/or in respect of multiple PDU sessions. The replication criteria may be defined in respect of a single type (and/or class) of traffic. The replication criteria may be defined in respect of multiple types (and/or classes) of traffic.

The following will describe potential replication criteria that may be used for determining when to duplicate uplink and/or downlink traffic. At least one of these replication criteria may be used for at least one type of traffic. A plurality of these criteria may be used for at least one type of traffic. All of these criteria may be used for at least one type of traffic.

As a first example, the duplicating entity (e.g., the RHF and/or the host) may be configured to only duplicate traffic that is offloaded to a local data network via a local user plane function. The local user plane function may be identified by considering uplink classifier/Branching Point (BP) scenarios (for example, an uplink classifier/BP function may be located in a local UPF). Therefore, a first example criteria is whether the traffic being transmitted is being offloaded to a local user plane function.

As another example, the duplicating entity may consider whether an AF provides a number of bursts or identifies specific bursts to be duplicated, where a burst is a consecutive series of packets sent without any waiting time between packet transmission. Each burst refers to Maximum Data Burst Volume that denotes the largest amount of data that the 5G-AN is required to serve within a period of a 5G-Access Network's Packet Delay Budget (PDB).

This AF may be any application function that may influence traffic duplication, and may, in principle, be any application server. Whether an AF provides a number of bursts to be duplicated and/or identifies specific bursts to be duplicated may be identified using a Burst Arrival Time (BAT) and periodicity that is part of the time sensitive communication (TSC) Assistance Information (TSCAI). In order to accomplish this, TSCAI may be provided to the UE and to a network RHF (possibly co-located in an UPF user plane function) or to a 5G AN function. Specific bursts to be duplicated may be identified using a burst number. This criterion may be useful for traffic subject to TSC. Examples of when traffic may be subject to TSC are defined in TS 23.501 clause 5.27.

As another example, the duplicating entity may determine whether or not to duplicate traffic based on survival time for that packet. A survival time for a packet is a duration of time from the time of a first data transmission for which the application may continue to work without receiving aa subsequent data transmission. In other words, a survival time may be considered as referring to the time period an application can survive without any data burst. The survival time may be provided by the application function either in terms of maximum number of messages (message is equivalent to all packets of a data burst) or in terms of time units. For example, when the survival time is set to a time period for delivering three packets and the first two packets are dropped, then the third packet may always replicated to ensure that the application receives at least the third packet and can survive.

As another example, the duplicating entity may duplicate only packets and/or frames that are deemed, or otherwise determined, to be important and/or have a higher associated priority than other packets and/or frames being transmitted. For example, Inter-frames (e.g., in MPEG/audiovisual communications) may be duplicated while Predictive-frames are not. Whether a frame is deemed to be an important frame or not may be indicated in the header.

As another example, the duplicating entity may determine when to duplicate packets based on quality of service (QoS) monitoring results (e.g., an actual delay incurred) over a period of time. From the UE perspective, the UE may alternatively or additionally consider a determined Quality of Experience (QoE) for the traffic being considered for duplication. Therefore, another criteria may relate to whether a quality of experience and/or a quality of service associated with traffic falls below a predetermined threshold. When it does, the traffic may or should be duplicated. When traffic "should" be duplicated may be defined by replication rules that are applied by the replication function. The replication function may determine that traffic should be replicated when at least one criterion comprised in the replication rules is fulfilled.

As another example, the duplicating entity may be configured to duplicate a certain percentage of packets. For example, the duplicating entity may be configured to duplicate every second packet or duplicate up to a max of 50% of the total traffic when a duplication rate is set at 50%.

As another example, the duplicating entity may duplicate packets based on a measured link quality and/or other measurement results. Measurements related to this may be performed in the UE and/or in the network.

The network may provide a guidance to the UE to use certain measurement thresholds for packet loss rate and/or round trip time for determining when to duplicate packets. This guidance may be provided as part of extensions to mechanisms that are already used for providing an entity with routing and/or steering information. For example, this guidance may be provided using extensions to signalling messages currently defined for signalling Access Traffic Steering, Switching and Splitting rules, and/or UE Route Selection Policy rules, and/or for signalling any other type of routing/steering rules.

Link quality measurements may be derived in a plurality of different ways. For example, link quality measurements may be based on TCP/IP, MPTCP and/or QUIC implementations, by the redundancy function in the UE, and/or based on the Performance Measurement Functionality (PMF) protocol, which is currently defined in 3GPP TS 23.501.

As another example, the duplicating entity may duplicate packets following receipt of a trigger from (and/or following detection of a trigger event in) an AF or another network entity (e.g., a Session Management Function, a policy control function (PCF), and/or some other network function). This may be effected in at least one or a plurality of different ways. For example, this may be effected via use of an explicit trigger message to stop and/or start the duplication. As another example, this may be effected via a reconfiguration of rules sent to the UE (e.g. via a reconfiguration of ATSSS rules or UE Route Selection Policy rules), and/or via reconfiguration of redundancy function rules sent to the UPF and/or RHF.

As another example, the duplicating entity may be configured to duplicate traffic only on certain access path(s)/point(s). In this case, the criteria may indicate which access point(s) are to receive duplicated packets, and/or an access technology for which duplicated packets are to be sent (e.g., Wireless Local Area Networks, with a potentially different criterion for each access point and/or access type).

Table 1, below, illustrates the different types of replication criteria that may be defined.

**Table 1 Replication criteria**

| Replication criteria for UL traffic | |
|---|---|
| Offloaded traffic only (for all or only certain flows) | Indicates that only the offloaded traffic (i.e., to uplink classifier or Branching Point) may be replicated in the two PDU Sessions. This replication criteria may also indicate a PDU Session to be used as a default PDU session for routing uplink traffic |
| | Network provides the traffic filter including an Internet Protocol (IP) prefix for offloading and that is used by the UE to determine what traffic to duplicate and what traffic not to duplicate. |
| Certain traffic only (with fixed ratio) | Indicates the percentage of traffic to be duplicated in the two PDU sessions |
| TSCAI (including Burst number, periodicity and BAT information) | To determine the burst numbers that shall be replicated |
| Survival time | Indicates the time period during which the application may survive without any burst or a message |
| Quality of Experience (QoE) threshold / Quality of Service (QoS) Monitoring criteria | Indicates the QoE / QoS monitoring measurements and the corresponding criteria e.g., thresholds that the UE may use to determine when to replicate the traffic. Latency measured using QoS monitoring has exceeded the requested latency by x%. |
| Max percentage of traffic that can be replicated | It indicates the max percentage (e.g., up to 20%) of the application traffic that can be replicated. |
| Link quality and measurement | Gives a guidance to the UE to perform traffic replication based on link quality measurement (e.g. packet loss rate or round trip time). This focuses only on the performance of a single link. |
| Start/stop trigger from AF or the network updating replication configuration | Explicit trigger from application to start and stop the replication |
| Access used | Lists the access that is to be used for replication |
| Network used for the replication (e.g. Standalone Non-Public Network (SNPN) ID or Public Land Mobile Network (PLMN) ID) | Lists the network that is to be used for replication |

As mentioned above, at least two of these criteria may be combined together and/or applied by the same replicating entity. It is further understood that one or more of these criteria may be combined and/or duplicated for use by the same replicating entity.

The intelligent traffic replication criteria may be applied to any of a plurality of cases specified for traffic replication. For example, in current 3GPP technologies, packet replication has been identified for URLLC dual PDU session cases, dual N3 tunnel cases, and/or dual carrier-/Packet Data Convergence Protocol- based duplication. The criteria may thus be applied in any of these cases and in ATSSS.

For the URLLC dual PDU session case, a UE may provide a redundancy sequence number and/or a PDU Session Pair indicator to the SMF that established that PDU session. This enables the 3GPP network to link a PDU Session with a redundant PDU Session (when available). However, when the duplication of traffic is triggered by at the application level, the network may notify the application function associated with that application that duplication of traffic is to be triggered by the application layer.

For the dual N3 tunnel case, a UPF may initiate duplication of traffic based on the fulfillment of at least one criteria. For example, a UPF may provide packets over two N3 tunnels to a Radio Access Network (RAN) based on the fulfillment of at least one replication criteria, where an N3 tunnel refers to a tunnel between a user plane function and a RAN. Further, a PCF may trigger duplication of traffic over the N3 interface.

As a second step, at least one of the replication criteria are delivered from the entity defining the replication criteria (e.g., the SMF and/or the PCF) to an entity that will be applying the replication criteria (e.g., the host and/or the RHF, gNB).

How the replication guidance is provisioned (i.e., which replication criteria in the defined set are sent to which entities) may be defined by a set of replication rules. At least one of the replication rules in the set may be generated by at least one network function, such as, for example, a Policy Control Function and/or a Session Management Function.

These rules may be defined and/or provided in at least one of a plurality of different ways. For example, the replication rules may be formed by extending at least one of the UE Route Selection Policy (UE Route Selection Policy) rules, the Access Traffic Steering, Switching and Splitting rules, and/or by using a new container sent to the UE. As another example, the replication rules may be formed as an enhancement of Forwarding Action rules (FAR), Multi-Access rules (MAR), and/or N4 rules sent to the user plane function via the N4 interface (i.e. the interface between user plane function and the session management function), by using a new container defined on the N4 interface, and/or by using a new interface.

Another example is as follows: the PCF 130' may determine replication policies that it passes to the SMF 114' ; the SMF provides such rules to the RAN (e.g., gNB) 603 via N2 session management signalling. This may be effected via a modified Next Generation Access Point (NGAP) PDU Session Resource Setup Request Transfer or PDU Session Resource Modify Request Transfer. The SMF may further provide the replication rules/policies to the UE 602 via non-access stratum (NAS) signaling. The intelligent duplication/replication by the replication handling function may thus be enforced in the gNB 603 for downlink traffic and in the UE 602 for uplink traffic.

It is the RHF or the gNB that uses the replication rules/replication criteria to determine whether packets are duplicated or not. For an RHF located at the device side, this determination may be made for uplink packets. For an RHF located at the network side, this determination may be performed for downlink packets. This may be performed regardless of whether RHF is collocated with another entity (e.g., a UE or a user plane function) or not. In general, an RHF may be separated from the UE part or collocated with UE in a same device, depending on how a skilled person chooses to implement it in a specific arrangement. Similarly, an RHF may be separated from a UPF or collocated with a UPF in a same device, depending on how a skilled person chooses to implement it in a specific arrangement. In case of gNB, the gNB may use the replication rules/replication criteria to determine whether the packets are duplicated on the downlink.

The UE or the RHF/host (if it exists) at the UE side may be configured to process the replication criteria in order to determine when to use multiple PDU Sessions or just a single PDU Session while transmitting uplink traffic, multiple DRBs or just a single DRB while transmitting uplink traffic. The Replication Handling Function/host at the network-side may be configured to be able to process the replication criteria in order to determine when to use multiple PDU Sessions or just a single PDU Session, single or dual General Packet Radio Service (GPRS) Tunnelling Protocol User Plane (GTP-U) tunnel for transmitting downlink traffic.

The network may provide rules to the UE to determine when to duplicate application traffic over two single access PDU Sessions, and/or one Multi Access PDU session. For two single PDU sessions, UE Route Selection Policy rules may indicate a PDU Session Pair ID and redundancy sequence number to be used for a data network name (DNN) and/or Single-Network Slice Selection Assistance Information (S-NSSAI) indicating that these two PDU Sessions should be used for duplicating traffic.

In some examples, the information described above in respect of the first step may be provided as part of extended UE Route Selection Policy rules. The UE may comprise at least one of the PDU Session Pair ID and/or the Redundancy Sequence Number as part of PDU Session establishment request. The UE may further employ replication criteria for uplink traffic transmission, either in a single PDU Session or across multiple PDU Sessions.

When any of the replication criteria is fulfilled for a UE, the UE (and/or the RHF and/or host associated therewith) may be caused to replicate/duplicate uplink traffic. The replicated traffic may be provided to the network using the redundant PDU Sessions, and/or dual connectivity links, and/or multiple QoS Flows.

When any of the criteria is fulfilled at the network-side, a UPF / RHF and/or host in the network may replicate downlink traffic using the redundant PDU Sessions, and/or dual GTP-U tunnel, and/or dual transport links.

For a Multi-access PDU session, the replication criteria may be provided within the Access Traffic Steering, Switching and Splitting rules to the UE and within N4/multi-access rules to the UPF with an explicit indication "steering mode = intelligent replication". In this case, at the establishment of each of the legs of the MA PDU session, the UE shall provide the same PDU session ID. Alternatively, the PDU Session Pair ID and/or the Redundancy Sequence Number may be provided by the network to the UE as for the case of independent PDU sessions. The UE may use the provided information to determine which PDU sessions are associated with each other.

In other example, new containers in existing messages (such as ATSSS messages) or new messages may be used to provide the traffic replication criteria to the UE and/or the UPF, and/or the RHF.

When any of the replication criteria is fulfilled for traffic to be transmitted at the UE, the UE may be caused to replicate uplink traffic using the multi-access PDU Sessions. Similarly, for downlink traffic, a UPF and/or RHF may replicate the downlink traffic using the multi-access PDU Sessions

In addition, criteria to determine which PDU Session or access is to be used when traffic is not duplicated may also be provided to the UE, and/or the UPF and/or RHF. This information may be provided in the form of an identifier for a path, such as, for example, a data network name and/or an S-NSSAI. This information may be provided to the UE as part of UE Route Selection Policy or Access Traffic Steering, Switching and Splitting rules respectively. This information may be provided to the UPF and/or the RHF as part of N4 rules. The UE may send traffic using the PDU Session with the corresponding data network name, S-NSSAI and/or Redundancy Sequence Number value when none of the criteria for duplication is fulfilled.

As a third step, an indicator for user plane traffic may be defined. The indicator may be defined such that a redundancy handling function on the egress side in at least one of the UE and the network function can determine whether a packet is a replicate of a packet already received and may be eliminated.

When the architecture of Figure 6B is being considered, as the rules are sent by the network to the UE and not directly to the RHF, how the UE communicates the rules to the RHF at the UE side may be specified. The present description assumes a delivery mechanism similar to the current Access Traffic Steering, Switching and Splitting (ATSSS) configuration provisioning, with replication being a new Access Traffic Steering, Switching and Splitting steering mode, or using an extension to UE Route Selection Policy rules for use in delivering replication criteria to the RHF instead. For example, with ATSSS, the network (e.g., an SMF) provides ATSSS rules to the UE. These rules guide the UE on which access path (e.g., 5G or Wifi/IEEE 802.11) to send uplink packets towards the network. These ATSSS rules may be enhanced to also include the replication criteria and guidance for traffic replication. It is understood that other routing/steering protocols and/or other types of signalling may provide the replication criteria. The following provides an example of how a UE may be provided with replication rules/criteria for its associated RHF.

First, the UE may indicate the UE's exact replication capability towards the Network (5GC). This may be provided by providing capability information for the UE to the network that indicates RHF or Access Traffic Steering, Switching and Splitting with replication. On receipt of such information, the network may consequently be aware of the availability of RHF at the UE side, and may provide information such as replication criteria to the UE with the understanding that the UE will forward this information to the RHF that can use it for uplink traffic forwarding.

The replication criteria may further be defined as a separate bundle within UE Route Selection Policy and/or Access Traffic Steering, Switching and Splitting rules, and/ or inserted within RHF rules. These RHF rule may be part of UE Route Selection Policy or Access Traffic Steering, Switching and Splitting rules, and/or otherwise delivered to the UE in a new container. The UE delivers the replication criteria to the RHF, when an RHF is available. The provided rules may be transparent for the UE, which means that the UE may not be able to understand the traffic duplication criteria being applied. When an RHF is not available at the UE, the UE may use the replication criteria and information itself for determining when to replicate uplink traffic.

Depending on where the rule is terminated, the UE and/or the RHF may be configured to process the duplication criteria/rules to identify the conditions under which uplink traffic is replicated. and determine the logic for replicating uplink traffic.

This third step may be performed by detecting a replicated packet. For example, a detected packet with the same Sequence Number as a previously received packet may be considered as a replicated packet. As another example, a receiving apparatus may detect other relevant packet information provided by the used protocol (e.g., QUIC (as defined in RFC 9000) and/or TCP/Internet Protocol (TCP/IP)) that is identical in both the detected packet and a previously received packet, or that otherwise demarks the detected packet as comprising duplicated traffic. It is assumed that the redundancy function may use the existing Redundancy Sequence Number (if available) or other relevant information for user plane packet duplication and elimination.

When the redundancy sequence number or information in the protocols (e.g., QUIC or TCP/IP) is not sufficient for the egress (within 5GS) to determine whether the packet is replicated or not, as an alternative approach, the ingress (within 5GS) may add a redundancy sequence number or an indicator so that the egress may appropriately eliminate replicated packets.

Figures 7 to 9 are flow charts illustrating potential operations that may be performed by apparatus illustrated in the above examples. It is understood that the apparatus of these Figures may interact with each other, where appropriate. It is further understand that the following described apparatus may perform at least one of the actions described in the above examples, and/or that the further illustrative information discussed in the above examples may be combined with the following more general disclosure.

Figure 7 is a flow chart illustrating operations that may be performed by an application for a replication function. The replication function may be a replication handling function.

At 701, the apparatus receives a set of replication criteria. The replication criteria defines for one or more session associated with a first user traffic and a second user traffic, when at least one of the first and second user traffic will be transmitted using a replication-based redundancy mechanism, wherein each of the first and second user traffic are associated with a respective quality of service requirement for transmission.

When the first and second user traffic is associated with a single session, the replication may be applied at a per flow and/or per-session-level of granularity. The replication criteria may be associated with usage of multiple DNN and/or slices (i.e., the replication criteria may be associated with a plurality of DNN identifier and slice identifier combinations), and may thus apply to a plurality of sessions.

A replication-based redundancy mechanism may refer to a mechanism used for redundancy in which a decision is made to replicate (and transmit the replication of) at least one data packet of user traffic prior to transmission of that at least one data packet.

At 702, the apparatus determines that the first user traffic fulfils at least one of the replication criteria while the second user traffic does not fulfil at least one of the replication criteria.

At 703, the apparatus causes, in response to said determination, the first user traffic to be transmitted over one or more transmission paths using a replication-based redundancy mechanism and the second user traffic to be transmitted over one or more transmission paths without using the replication-based redundancy mechanism. The apparatus may cause this to happen by configuring an apparatus arranged to transmit the first user traffic to transmit multiple copies of the same data packet of the first user traffic.

The one or more transmission paths may be the same for both the first and second user traffic. The one or more transmission paths used for the first user traffic may be different to the one or more transmission paths used for the second user traffic. At least one of the transmission paths used for the first user traffic may be the same as at least one of the transmission paths used for the second user traffic.

The replication criteria may be received from at least one of a policy control function and/or a session management function.

The replication function is collocated in a same apparatus as a first user equipment configured to transmit the first and/or second user traffic. The replication function may be collocated in a same apparatus as a first user equipment and a second user equipment. The replication function may be collocated with a user plane function configured to replicate user traffic based on the received set of replication criteria. The replication function may be collocated with an access point (e.g., a gNB) providing access to a network. The replication function may be associated with at least one of the above (e.g., a first user equipment, a second user equipment, a user plane function, and/or an access point) in that it is communicatively coupled to the at least one of the apparatus (e.g., they may not be collocated in the same apparatus).

The apparatus may receive third user traffic over a network, and determine that the third user traffic was transmitted using at least one replication-based redundancy mechanism. In response to the determining, the apparatus may cause at least one duplicate (e.g., replicated) packet comprised in the third user traffic to be deleted.

The determining that the third user traffic was transmitted using at least one replication-based redundancy mechanism may be performed by detecting a same packet identifier and/or same sequence number in multiple packets of the third user traffic.

Figure 8 is a flow chart illustrating operations that may be performed by an apparatus for a user equipment. It is understood that these operations may be performed by an apparatus for any other entity associated with a replication function (such as the replication function described above in relation to Figure 7), such as, for example, a user plane function and/or an access point.

At 801, the apparatus receives a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission. This replication criteria may be as described above in relation to Figure 7.

At 802, the apparatus forwards the replication criteria to a replication function. The replication function may be collocated with the apparatus in a same device. The replication function may not be collocated with the apparatus in a same device.

At 803, the apparatus transmits the first user traffic and/or the second user traffic in response to receiving an indication to do so from the replication function. The first and/or second user traffic may be transmitted using respective at least one transmission paths, as discussed above in relation to Figure 7.

The apparatus may receive, from a network, routing rules defining how user traffic is routed through the network, wherein the replication criteria are comprised in the routing rules. The apparatus may detect an explicit indication that the replication criteria are comprised in said network routing rules. The routing rules may comprise: Access Traffic Steering, Switching and Splitting rules and/or user equipment route selection policy rules.

The apparatus may establish one or more data sessions to ensure the replication criteria can be fulfilled, said establishing said one of more data sessions comprising signalling to the network a request that the one or more data sessions use an identifier provided in said received indication. This request may be signalled to, for example, a session management function associated with the one or more data sessions.

The apparatus may signal, to a network function, an indication that the user equipment is collocated (and/or otherwise associated with) with the replication handling function, wherein the replication criteria are received in response to said signalling.

Figure 9 illustrates operations that may be performed by an apparatus for a network function. The network function may be an SMF. The network function may be a PCF.

At 901, the apparatus signals, to a replication handling function, a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission.

The apparatus may receive, from a user equipment, an indication that the user equipment is collocated (or otherwise associated) with the replication handling function. The signalling may be performed in response to said receipt. As mentioned above, the replication function may a replication function associated with/collocated with a UPF and/or an access point. The set of replication criteria may be provided to the UPF/access point in response to said receipt of the indication from the user equipment, and/or may be provided at some other time.

The apparatus may comprise the replication criteria in the same signalling as routing rules, the routing rules defining how user traffic is routed through the network, wherein the signalling further comprises an explicit indication that the replication criteria are comprised in said same signalling.

The routing rules may comprise: Access Traffic Steering, Switching and Splitting rules and/or user equipment route selection policy rules.

In all of the above examples, the replication criteria may comprise criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, an used access network type , and an indication of a network being used.

Further, in all of the above examples, a transmission path may comprise at least one of an access point, an access technology type, a data network name, and/or a slice identifier.

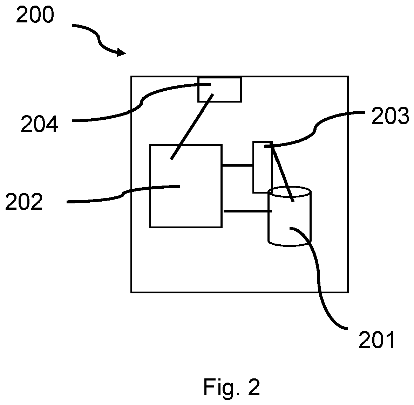

Figure 2 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host, for example an apparatus hosting an NRF, NWDAF, AMF, SMF, UDM/UDR, and so forth. The control apparatus may be integrated with or external to a node or module of a core network or RAN. In some examples, base stations comprise a separate control apparatus unit or module. In other examples, the control apparatus can be another network element, such as a radio network controller or a spectrum controller. The control apparatus 200 can be arranged to provide control on communications in the service area of the system. The apparatus 200 comprises at least one memory 201, at least one data processing unit 202, 203 and an input/output interface 204. Via the interface the control apparatus can be coupled to a receiver and a transmitter of the apparatus. The receiver and/or the transmitter may be implemented as a radio front end or a remote radio head. For example, the control apparatus 200 or processor 201 can be configured to execute an appropriate software code to provide the control functions.

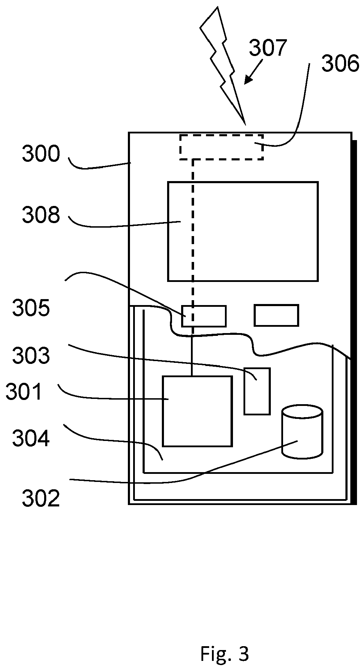

A possible wireless communication device will now be described in more detail with reference to Figure 3 showing a schematic, partially sectioned view of a communication device 300. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is referred to as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A wireless communication device may be for example a mobile device, that is, a device not fixed to a particular location, or it may be a stationary device. The wireless device may need human interaction for communication, or may not need human interaction for communication. As described herein, the terms UE or "user" are used to refer to any type of wireless communication device.

The wireless device 300 may receive signals over an air or radio interface 307 via appropriate apparatus for receiving and may transmit signals via appropriate apparatus for transmitting radio signals. In Figure 3, a transceiver apparatus is designated schematically by block 306. The transceiver apparatus 306 may be provided, for example, by means of a radio part and associated antenna arrangement. The antenna arrangement may be arranged internally or externally to the wireless device.

A wireless device is typically provided with at least one data processing entity 301, at least one memory 302 and other possible components 303 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 304. The user may control the operation of the wireless device by means of a suitable user interface such as keypad 305, voice commands, touch sensitive screen or pad, combinations thereof or the like. A display 308, a speaker and a microphone can be also provided. Furthermore, a wireless communication device may comprise appropriate connectors (either wired or' wireless) to other devices and/or for connecting external accessories, for example hands-free equipment, thereto.

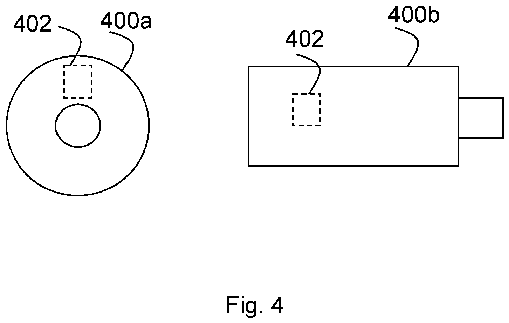

Figure 4 shows a schematic representation of non-volatile memory media 400a (e.g. computer disc (CD) or digital versatile disc (DVD)) and 400b (e.g. universal serial bus (USB) memory stick) storing instructions and/or parameters 402 which when executed by a processor allow the processor to perform one or more of the steps of the methods of Figure 7 and/or Figure 8 and/or Figure 9 and/or methods otherwise described previously.

As provided herein, various aspects are described in the detailed description of examples and in the claims. In general, some examples may be implemented in hardware or special purpose circuits, software, logic or any combination thereof. For example, some aspects may be implemented in hardware, while other aspects may be implemented in firmware or software which may be executed by a controller, microprocessor or other computing device, although examples are not limited thereto. While various examples may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The examples may be implemented by computer software stored in a memory and executable by at least one data processor of the involved entities or by hardware, or by a combination of software and hardware. Further in this regard it should be noted that any procedures, e.g., as in Figure 7 and/or Figure 8 and/or Figure 9 and/or otherwise described previously, may represent program steps, or interconnected logic circuits, blocks and functions, or a combination of program steps and logic circuits, blocks and functions. The software may be stored on such physical media as memory chips, or memory blocks implemented within the processor, magnetic media (such as hard disk or floppy disks), and optical media (such as for example DVD and the data variants thereof, CD, and so forth).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (AStudy ItemC), gate level circuits and processors based on multi-core processor architecture, as non-limiting examples.

Additionally or alternatively, some examples may be implemented using circuitry. The circuitry may be configured to perform one or more of the functions and/or method steps previously described. That circuitry may be provided in the base station and/or in the communications device and/or in a core network entity.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of non-limiting examples a full and informative description of some examples. However, various modifications and adaptations may become apparent to those skilled in the relevant arts in view of the foregoing description, when read in conjunction with the accompanying drawings and the claims. However, all such and similar modifications of the teachings will still fall within the scope of the claims.

In the above, different examples are described using, as an example of an access architecture to which the described techniques may be applied, a radio access architecture based on long term evolution advanced (LTE Advanced, LTE-A) or new radio (NR, 5G), without restricting the examples to such an architecture, however. The examples may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

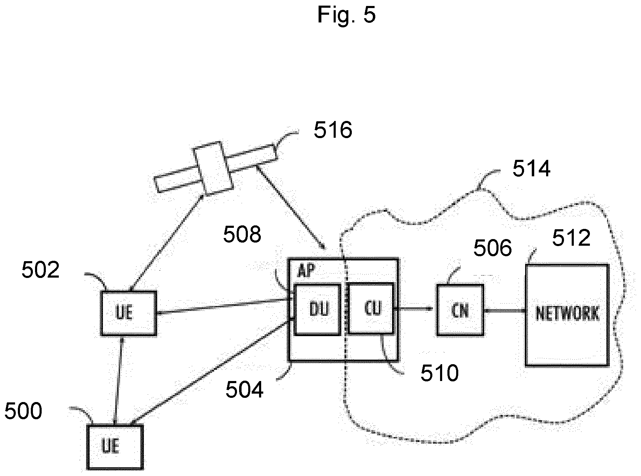

Figure 5 depicts examples of simplified system architectures only showing some elements and functional entities, all being logical units, whose implementation may differ from what is shown. The connections shown in Figure 5 are logical connections; the actual physical connections may be different. It is apparent to a person skilled in the art that the system typically comprises also other functions and structures than those shown in Figure 5.

The examples are not, however, restricted to the system given as an example but a person skilled in the art may apply the solution to other communication systems provided with necessary properties.

The example of Figure 5 shows a part of an exemplifying radio access network. For example, the radio access network may support sidelink communications described below in more detail.

Figure 5 shows devices 500 and 502. The devices 500 and 502 are configured to be in a wireless connection on one or more communication channels with a node 504. The node 504 is further connected to a core network 506. In one example, the node 504 may be an access node such as (e/g)NodeB serving devices in a cell. In one example, the node 504 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 506 (CN or next generation core NGC). Depending on the deployed technology, the (e/g)NodeB is connected to a serving and packet data network gateway (S-GW +P-GW) or user plane function (UPF), for routing and forwarding user data packets and for providing connectivity of devices to one or more external packet data networks, and to a mobile management entity (MME) or access mobility management function (AMF), for controlling access and mobility of the devices.

Examples of a device are a subscriber unit, a user device, a user equipment (UE), a user terminal, a terminal device, a mobile station, a mobile device, etc

The device typically refers to a mobile or static device (e.g. a portable or nonportable computing device) that includes wireless mobile communication devices operating with or without an universal subscriber identification module (USIM), including, but not limited to, the following types of devices: mobile phone, smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (loT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud.

The device illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station. The device (or, in some examples, a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 5) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control). 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The LTE network architecture is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 512, such as a public switched telephone network, or a VoIP network, or the Internet, or a private network, or utilize services provided by them. The communication network may also be able to support the usage of cloud services, for example at least part of core network operations may be carried out as a cloud service (this is depicted in Figure 5 by "cloud" 514). This may also be referred to as Edge computing when performed away from the core network. The communication system may also comprise a central control entity, or a like, providing facilities for networks of different operators to cooperate for example in spectrum sharing.

The technology of Edge computing may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 508) and nonreal time functions being carried out in a centralized manner (in a centralized unit, CU 510).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where Edge computing servers can be placed between the core and the base station or nodeB (gNB). One example of Edge computing is MEC, which is defined by the European Telecommunications Standards Institute. It should be appreciated that MEC (and other Edge computing protocols) can be applied in 4G networks as well.

5G may also utilize satellite communication to enhance or complement the coverage of 5G service, for example by providing backhauling. Possible use cases are providing service continuity for machine-to-machine (M2M) or Internet of Things (loT) devices or for passengers on board of vehicles, Mobile Broadband, (MBB) or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

The depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 5 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 5). A HNB Gateway (HNB-GW), which is typically installed within an operator's network may aggregate traffic from a large number of HNBs back to a core network.

## Claims

1. An apparatus comprising a replication function, the apparatus comprising means for:
receiving a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission;
determining that the first user traffic fulfils at least one of the replication criteria while the second user traffic does not fulfil at least one of the replication criteria; and
causing, in response to said determination, the first user traffic to be transmitted over one or more transmission paths using a replication-based redundancy mechanism and the second user traffic to be transmitted over one or more transmission paths without using the replication-based redundancy mechanism.

2. An apparatus as claimed in claim 1, wherein the replication criteria is received from at least one of a policy control function and/or a session management function.

3. An apparatus as claimed in any preceding claim, wherein the replication function is collocated in a same apparatus as a first user equipment configured to transmit the first and/or second user traffic.

4. An apparatus as claimed in any of claims 1 to 2, wherein the replication function is collocated with a user plane function configured to replicate user traffic based on the received set of replication criteria.

5. An apparatus as claimed in any preceding claim, comprising means for:
receiving third user traffic over a network;
determining that the third user traffic was generated and transmitted using at least one replication-based redundancy mechanism; and
in response to the determining, causing at least one duplicate packet comprised in the third user traffic to be deleted.

6. An apparatus as claimed in claim 5, wherein said means for determining that the third user traffic was generated and transmitted using at least one replication-based redundancy mechanism comprises means for detecting a same packet identifier and/or same sequence number in multiple packets of the third user traffic.

7. An apparatus for a user equipment, the apparatus comprising means for:
receiving a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission;
forwarding the replication criteria to a replication function; and
transmitting the first user traffic and/or the second user traffic in response to receiving an indication to do so from the replication function.

8. An apparatus as claimed in claim 7, further comprising means for:
receiving, from a network, routing rules defining how user traffic is routed through the network, wherein the replication criteria are comprised in the routing rules; and
detecting an explicit indication that the replication criteria are comprised in said routing rules.

9. An apparatus as claimed in claim 8, wherein the routing rules comprise: Access Traffic Steering, Switching and Splitting rules and/or user equipment route selection policy rules.

10. An apparatus as claimed in any of claims 7 to 9, wherein the apparatus comprises means for establishing one or more data sessions to ensure the replication criteria can be fulfilled, said means for establishing said one of more data sessions comprising means for signalling to the network a request that the one or more data sessions use an identifier provided in said received indication.

11. An apparatus as claimed in any of claims 7 to 10, comprising means for signalling, to a network function, an indication that the user equipment is collocated with the replication handling function, wherein the replication criteria are received in response to said signalling.

12. An apparatus for a network function, the apparatus comprising means for: signalling, to a replication handling function, a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission.

13. An apparatus as claimed in claim 12, the apparatus comprising means for receiving, from a user equipment, an indication that the user equipment is collocated with the replication handling function, wherein said signalling is performed in response to said receipt.

14. An apparatus as claimed in any of claims 12 to 13, comprising means for comprising the replication criteria in the same signalling as routing rules, the routing rules defining how user traffic is routed through the network, wherein the signalling further comprises an explicit indication that the replication criteria are comprised in said same signalling.

15. An apparatus as claimed in claim 14, wherein the routing rules comprise: Access Traffic Steering, Switching and Splitting rules and/or user equipment route selection policy rules.

16. An apparatus as claimed in any preceding claim, wherein the replication criteria comprises criteria relating to at least one of: an indication of specific traffic to be duplicated, a percentage of traffic to be duplicated, time sensitive communication assistance information for identifying at least one burst number of traffic to be duplicated, a survival time of identified traffic, an observed quality of service level of traffic, an observed quality of experience level of, an indication of an explicit trigger from an application that will cause the duplication of traffic to start and/or stop, a used access network type, and an indication of a network being used.

17. A method for an apparatus comprising a replication function, the method comprising:
receiving a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission;
determining that the first user traffic fulfils at least one of the replication criteria while the second user traffic does not fulfil at least one of the replication criteria; and
causing, in response to said determination, the first user traffic to be transmitted over one or more transmission paths using a replication-based redundancy mechanism and the second user traffic to be transmitted over one or more transmission paths without using the replication-based redundancy mechanism.

18. A method for an apparatus for a user equipment, the method comprising:
receiving a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission;
forwarding the replication criteria to a replication function; and
transmitting the first user traffic and/or the second user traffic in response to receiving an indication to do so from the replication function.

19. A method for an apparatus for a network function, the method comprising:
signalling, to a replication handling function, a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission.

20. A computer program product that, when run on an apparatus for a replication function, causes the apparatus to perform:
receiving a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission;
determining that the first user traffic fulfils at least one of the replication criteria while the second user traffic does not fulfil at least one of the replication criteria; and
causing, in response to said determination, the first user traffic to be transmitted over one or more transmission paths using a replication-based redundancy mechanism and the second user traffic to be transmitted over one or more transmission paths without using the replication-based redundancy mechanism.

21. A computer program product that, when run on an apparatus for a user equipment, causes the apparatus to perform:
receiving a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission;
forwarding the replication criteria to a replication function; and
transmitting the first user traffic and/or the second user traffic in response to receiving an indication to do so from the replication function.

22. A computer program product that, when run on an apparatus for a network function, causes the apparatus to perform:
signalling, to a replication handling function, a set of replication criteria defining, for one or more session associated with a first user traffic and a second user traffic, when at least one of the first and second user traffic will be transmitted using a replication-based redundancy mechanism, wherein each of the first and second user traffic are associated with a respective quality of service requirement for transmission.
